# EUROPÄISCHE PATENTANMELDUNG

(11) **EP 4 086 197 A1**
(43) Veröffentlichungstag der Anmeldung: **09.11.2022**
(21) Anmeldenummer: 21171755.8
(22) Anmeldetag: 03.05.2021
(51) Int. Cl.: B65G 1/04, E04H 12/22, B65G 1/14

(54) **ELEMENT ZUR BILDUNG EINES HOLZLAGERSYSTEMS**

(71) Anmelder: Schreiner, Franz Christian, 8250 Vorau (AT)
(72) Erfinder: Schreiner, Franz Christian, 8250 Vorau (AT); Ganster, Stefan, 8184 Anger (AT)
(74) Vertreter: Wirnsberger & Lerchbaum Patentanwälte OG

(57) **Zusammenfassung**

Die Erfindung betrifft ein Element (1) zur Bildung eines Holzlagersystems, ein Verfahren zur dessen Herstellung und die Verwendung des Elements in einem Holzlagersystem, wobei das Element zumindest teilweise aus einem ausgehärteten Material, insbesondere Beton, gebildet ist. Um auf besonders einfache Weise ein Holzlagersystem errichten zu können, ist erfindungsgemäß vorgesehen, dass an einer Oberseite (3) zwei seitliche Begrenzungsmittel (2) vorgesehen sind, zwischen welchen ein liegender, erster Baumstamm (4) endseitig positionierbar ist, wobei die Oberseite ferner eine Ausnehmung (6) aufweist, in welcher ein zweiter Baumstamm (5) stehend positionierbar ist.

## Beschreibung

Die Erfindung betrifft ein Element zur Bildung eines Holzlagersystems, welches zumindest teilweise aus einem ausgehärteten Material, insbesondere Beton, gebildet ist.

Weiter betrifft die Erfindung ein Verfahren zum Herstellen eines Elementes, wobei eine Schalung mit einem Bodenteil verwendet wird, um eine Formgebung des Elementes festzulegen.

Darüber hinaus betrifft die Erfindung eine Verwendung eines derartigen Elementes.

Dem Stand der Technik können eine Reihe von Vorrichtungen entnommen werden, welche auf ein Lagern von Holz gerichtet sind. Dabei werden oftmals mehrere Träger so miteinander verbunden, dass diese eine Basis zum Auflegen von Holz bilden. Das Verbinden der Träger zur Basis geschieht vorwiegend durch Befestigungsmittel wie Schrauben oder Bolzen. Auf dieselbe Weise können auch Steher an oder in der Basis befestigt werden, um Holzbretter oder Baumstämme auf der Basis stapeln und ein Abrutschen zu verhindern. Hierbei wird eine Höhe der Steher in der Regel auf eine vorgesehene Stapelhöhe des Holzes abgestimmt. Dementsprechend erfolgt ein Aufbau von derartigen Vorrichtungen entweder direkt an einem Einsatzort oder vorab unter Berücksichtigung benötigter Abmessungen. Anhand zahlreicher Einzelteile erfordert der Aufbau aber in beiden Fällen einen hohen Zeitaufwand.

Um auf ein Anfertigen von Trägern und Stehern verzichten und ein Holzlagersystem universeller gestalten zu können, gehen aus dem Stand der Technik auch Elemente hervor, welche durch Holzbretter miteinander verbindbar sind. Ihre Vielseitigkeit gewinnen solche Holzlagerungssysteme dadurch, dass Holzbretter in die Elemente eingeführt und die Abmessungen der Basis sowie die Stapelhöhe durch eine Länge der Holzbretter definiert werden können. Dementsprechend wird Werkzeug benötigt, um die Holzbretter auf örtliche Gegebenheiten eines Holzlagerplatzes anpassen zu können. Sobald die Holzbretter die gewünschten Abmessungen aufweisen, werden diese in die Elemente eingebracht und über Befestigungsmittel, wie Schrauben, Bolzen oder Nägel, fixiert. Nachteilig ist bei den aus dem Stand der Technik bekannten Elementen zum Herstellen eines Holzlagerungssystems jedoch, dass die Holzbretter zum Verbinden der Elemente an diesen befestigt und deren Abmessungen auf die jeweiligen Elemente angepasst werden müssen.

Folglich ist die Aufgabe der Erfindung darin zu sehen, ein Element der eingangs genannten Art anzugeben, mit welchem ein Holzlagersystem auf besonders einfache Weise errichtet werden kann.

Des Weiteren ist es Aufgabe der Erfindung, ein Verfahren der eingangs genannten Art anzugeben, durch welches ein derartiges Element auf einfache Weise herstellbar ist.

Eine weitere Aufgabe der Erfindung liegt darin, eine Verwendung eines derartigen Elementes anzugeben.

Die erste Aufgabe wird erfindungsgemäß durch ein Element der eingangs genannten Art gelöst, bei welchem an einer Oberseite zwei seitliche Begrenzungsmittel vorgesehen sind, zwischen welchen ein liegender, erster Baumstamm endseitig positionierbar ist, wobei die Oberseite ferner eine Ausnehmung aufweist, in welcher ein zweiter Baumstamm stehend positionierbar ist.

Hierdurch ergibt sich ein besonders einfacher Aufbau, zumal ein Holzlagersystem mit den erfindungsgemäßen Elementen auf einfache Weise in Verbindung mit Baumstämmen gebildet werden kann, indem einerseits die liegenden, also etwa horizontal ausgerichteten, Baumstämme eine Unterlage für weitere Baumstämme bilden, sodass die Baumstämme von unten belüftet werden können, und die stehenden, also etwa vertikal ausgerichteten, zweiten Baumstämme eine seitliche Begrenzung für auf den ersten Baumstämmen liegende Baumstämme bilden, sodass ein Herabfallen dieser Baumstämme verhindert ist. Somit kann ein Holzlagersystem auf einfache Weise mit Baumstämmen, die in der Regel vorhanden sind, gebildet werden, und zwar an unterschiedlichsten Orten, beispielsweise in einem Wald. Hierzu sind die Begrenzungsmittel so auf der Oberseite des Elementes angeordnet, dass Baumstämme zwischen diesen positionierbar sind, beispielsweise mit einem Abstand von 20 cm bis 200 cm.

Wird der erste Baumstamm jeweils endseitig auf zwei erfindungsgemäßen Elementen positioniert, welche auf einem Untergrund positioniert sind, ergibt sich eine von einer Höhe der Elemente abhängige Beabstandung des ersten Baumstammes vom Untergrund. Dadurch wird auf einfache und effiziente Weise verhindert, dass der erste Baumstamm Feuchtigkeit aus dem Untergrund aufnimmt. Zudem bildet der erste Baumstamm eine horizontale Auflagefläche, weshalb auf zwei, vorzugsweise parallel zueinander ausgerichteten, ersten Baumstämmen weitere Baumstämme aufgelegt werden können.

Die Begrenzungsmittel können eine beliebige geometrische Form annehmen und sind bevorzugt als Stifte, Blöcke oder Kanten ausgebildet. Vorteilhaft ist, wenn die Begrenzungsmittel einander gegenüberliegend auf der Oberseite des Elementes angeordnet sind, wobei sich eine parallele Anordnung als besonders vorteilhaft erwiesen hat. Diese Anordnung wird in der Regel durch eine Positionierung der Begrenzungsmittel entlang von Seitenkanten des Elementes erzielt. Dementsprechend halten die Begrenzungsmittel unabhängig von deren geometrischer Form den ersten Baumstamm, bevorzugt zentral zwischen den Begrenzungsmitteln, in Position. Entsprechend wird sowohl durch die geometrische Form als auch die vorgesehene Positionierung der Begrenzungsmittel eine seitliche Verschiebung des ersten Baumstammes, also normal zu einer Längsachse des Baumstammes, entsprechend erschwert und/oder verhindert.

Zudem weist die Oberseite eine Ausnehmung auf, in welcher der zweite Baumstamm positionierbar ist. Hierbei ist die Ausnehmung üblicherweise derart ausgebildet, dass der, in der Ausnehmung positionierte, zweite Baumstamm vertikal aus dem Element hervorsteht, wenn das Element in einer Arbeitsposition auf dem Untergrund positioniert ist, und der zweite Baumstamm somit eine seitliche Begrenzung darstellt, welche ein Herabrollen der auf den ersten Baumstämmen liegenden weiteren Baumstämme auf effiziente Weise verhindert. Hierzu ist die Ausnehmung bevorzugt derart gestaltet, dass Baumstämme unterschiedlichsten Durchmessers aufgenommen werden können, beispielsweise etwa kreisrund mit einem Durchmesser von 20 cm bis 200 cm gestaltet. Zudem ist die Ausnehmung üblicherweise ausreichend tief ausgebildet, um den eingeführten Baumstamm an einem Umfallen zu hindern, selbst wenn auf diesen Normalkräfte anliegender weiterer Baumstämme wirken. Die Ausnehmung kann auch bis zu einer gegenüberliegenden Seite des Elementes reichen. Dementsprechend wird durch ein Einführen des zweiten Baumstammes in die Ausnehmung ein sicheres Stapeln von weiteren Baumstämmen ermöglicht.

In einer besonderen Ausbildungsvariante kann der zweite Baumstamm, welcher in die Ausnehmung eingeführt wird, auch ein seitliches Begrenzungsmittel darstellen. Dabei ist die Ausnehmung zumindest bereichsweise parallel zu einem seitlichen Begrenzungsmittel angeordnet. Entsprechend bildet der daraus hervorstehende zweite Baumstamm ein seitliches Begrenzungsmittel aus, sodass zwischen diesem und einem weiteren, vorzugsweise parallel angeordneten, seitlichen Begrenzungsmittel der erste Baumstamm positioniert werden kann. Bei dieser Ausführungsvariante kommen dem zweiten Baumstamm zwei Funktionen zu, nämlich erstens jene des seitlichen Begrenzungsmittels, durch welches eine seitliche Bewegung des ersten Baumstammes begrenzt wird, und zweitens jene der Begrenzung für auf dem ersten Baumstamm liegende weitere Baumstämme. Alternativ können auch zwei Ausnehmungen in der Oberseite des Elementes vorgesehen sein, sodass zwei in diese eingeführte zweite Baumstämme auf analoge Weise als seitliche Begrenzungsmittel wirken können. Demensprechend könnte ein erster Baumstamm endseitig zwischen zwei zweiten Baumstämmen positioniert und dessen seitliche Verschiebung durch die zweiten Baumstämme erschwert und/oder verhindert werden.

Bevorzugt weist das Element eine Quaderform mit Bodenseite, Oberseite und Seitenflächen auf. Dadurch kann das Element standsicher auf verschiedensten Untergründen angeordnet und ein solides Fundament für das Holzlagersystem gebildet werden. Natürlich kann die Grundform des Elementes auch mit abgerundeten Kanten und die Seitenflächen gewölbt ausgebildet sein.

Vorzugsweise wird das Element aus Beton gebildet, wodurch eine besondere Langlebigkeit sowie Witterungsbeständigkeit des Elementes erreicht werden kann. Alternativ kann das Element auch aus Kunststoff, vorzugsweise Polypropylen (PP) oder Polyethylen (PE), gebildet sein, sodass dessen Dichte besonders niedrig ist. Dadurch kann ein solches Element besonders einfach zum Einsatzort transportiert und an diesem positioniert werden. Zudem weist das Element, ähnlich jenem aus Beton gefertigten, eine besonders gute Witterungsbeständigkeit auf. Sowohl Elemente aus Beton als auch jene aus Kunststoff können auch digital mittels eines 3-D-Druckverfahrens auf einfache Weise hergestellt werden.

Es hat sich bewährt, dass die seitlichen Begrenzungsmittel derart auf der Oberseite angeordnet sind, dass eine Auslenkung des ersten Baumstammes aus einer Ruheposition sowohl in eine erste Richtung als auch in eine zweite Richtung begrenzbar ist. Hierdurch wird ein Herabrollen des endseitig positionierten ersten Baumstammes vom Element verhindert. Dazu stehen die seitlichen Begrenzungsmittel entweder aus dem Element hervor, insbesondere als Stifte oder Blöcke, oder sind in eine Form des Elementes eingebunden. In letzterem Fall sind die seitlichen Begrenzungsmittel vorzugsweise als bereichsweise Erhöhungen der Oberseite des Elementes zu verstehen, welche in der Regel an den seitlichen Rändern der Oberseite positioniert sind. Dabei können die seitlichen Begrenzungsmittel eine Kante aufweisen, welche die maximale Auslenkung des ersten Baumstammes begrenzt. Folglich kann die Auslenkung des ersten Baumstammes aus einer Ruheposition in zwei Richtungen erfolgen, die erste Richtung, welche bevorzugt normal zur Längsachse des ersten Baumstammes orientiert ist, und die zweite Richtung, welche in einem Winkel von 180° zur ersten Richtung verläuft. Üblicherweise sind erste Richtung und zweite Richtung etwa horizontal orientiert. Dabei kann die zweite Richtung auch entgegengesetzt zur ersten Richtung orientiert sein. Dementsprechend verhindern derart ausgebildete seitliche Begrenzungsmittel auf effiziente Weise sowohl die seitliche Verschiebung als auch das horizontale Herabrollen des ersten Baumstammes vom Element.

Zweckmäßigerweise ist zwischen den seitlichen Begrenzungsmitteln zumindest eine Vertiefung mit rundem, bevorzugt mit kreissegmentförmigem, Querschnitt vorgesehen, welche sich im Wesentlichen konstant entlang einer dritten Richtung erstreckt. Dadurch kann der weitestgehend runde erste Baumstamm besonders gut von der Vertiefung des Elementes aufgenommen werden. Dementsprechend wird die Auflagefläche zwischen dem ersten Baumstamm und dem Element vergrößert und ein Auslenken des ersten Baumstammes aus der Ruheposition erschwert.

Die seitlichen Begrenzungsmittel auf der Oberseite des Elementes verlaufen für gewöhnlich entlang der dritten Richtung und erstrecken sich dabei zumeist über das gesamte Element. Da die Vertiefung vorzugsweise zwischen den seitlichen Begrenzungsmitteln positioniert ist, erstreckt sich auch diese im Wesentlichen konstant entlang der dritten Richtung über die gesamte Oberseite des Elementes. Allerdings kann auch vorgesehen sein, dass sich die seitlichen Begrenzungsmittel und/oder die Vertiefung nur über bestimmte Bereiche der Oberseite des Elementes entlang der dritten Richtung erstrecken. Besonders vorteilhaft ist eine derartige Ausbildung, wenn nur ein erster Baumstamm endseitig am Element positioniert werden soll, dieses also ein Endstück des Holzlagersystems darstellt.

Alternativ können entlang der dritten Richtung auch mehrere seitliche Begrenzungsmittel mit dazwischenliegenden Vertiefungen vorgesehen sein, sodass sich diese lediglich über Teilbereiche des Elementes erstrecken. Dabei kann die Ausnehmung zwischen den Vertiefungen liegen, sodass diese mit einer größeren Tiefe ausgebildet sein kann. Durch die hinzugewonnene Tiefe der Ausnehmung, wird ein vertikal eingeführter zweiter Baumstamm besonders gut stabilisiert.

Mit Vorteil ist vorgesehen, dass die Ausnehmung als Öffnung ausgebildet ist, welche sich entlang einer vierten Richtung erstreckt und das Element vorzugsweise durchsetzt. Hierdurch kann der zweite Baumstamm besonders tief in der Öffnung positioniert und stabil in einer vertikalen Position gehalten werden. Die vierte Richtung erstreckt sich dabei entlang einer Höhe des Elementes, sodass diese vorzugsweise einen Winkel von 90° mit der ersten, der zweiten und der dritten Richtung einschließt. Über die vierte Richtung wird der zweite Baumstamm vorzugsweise über die gesamte Höhe des Elementes in der Öffnung positioniert, sodass dieser den Untergrund berührt. Zudem wird bei einer Ausgestaltung der Ausnehmung als Öffnung ein Gewicht des Elementes reduziert, wodurch ein Element mit Öffnung ein zum Teil beträchtlich geringeres Gewicht aufweisen kann als ein Element mit Ausnehmung.

Bevorzugt weist die Ausnehmung einen kreisförmigen Querschnitt auf. Hierdurch können sowohl Baumstämme mit rundem Querschnitt als auch beschädigte oder deformierte Baumstämme mit davon abweichenden Querschnitten aufgenommen werden. Hierzu ist der Querschnitt der Ausnehmung ausreichend groß ausgebildet, um herkömmliche Baumstämme mit einem Durchmesser von bis zu 500 mm ohne Bearbeitung aufnehmen zu können. Bei Durchmessern von über 500 mm ist es demnach vorteilhaft, den zu positionierenden zweiten Baumstamm endseitig zu bearbeiten. Im Falle von besonders kleinen Durchmessern des zweiten Baumstammes, kann dieser einfach in der Ausnehmung positioniert und durch Eintreiben von einem oder mehreren Keilen in dieser fixiert werden. Zudem kann die Anbringung solcher Keile das Umfallen des zweiten Baumstammes verhindern und das Holzlagersystem dadurch besonders gut stabilisieren.

Mit Vorzug schneiden die Vertiefung und die Ausnehmung einander zumindest teilweise. Dadurch können sich der erste und der zweite Baumstamm gegenseitig stabilisieren. Durch den Durchmesser des ersten Baumstammes wird der, in der Ausnehmung positionierte, zweite Baumstamm zusätzlich stabilisiert und gleichzeitig begrenzt der zweite Baumstamm eine Verschiebung des ersten Baumstammes in die dritte Richtung. In einer besonders vorteilhaften Ausbildung des Elementes ist die Ausnehmung mittig auf dessen Oberseite positioniert, wodurch diese, im Fall einer Erstreckung der Vertiefung über das gesamte Element, mit der Vertiefung zusammenfällt. Hierdurch kann der, endseitig positionierte, erste Baumstamm mit dessen Stirnseite den, in der Ausnehmung positionierten, zweiten Baumstamm stützen.

Es hat sich bewährt, dass innerhalb des Elementes zumindest ein, vorzugsweise korbförmiges, Bewehrungselement angeordnet ist. Somit wird eine Stabilität des Elementes erhöht und gleichzeitig eine verbesserte Formbeständigkeit erreicht. Insbesondere bei Verwendung von Beton kann dadurch eine Aufnahme von Zugspannungen verbessert und eine Rissbildung an der Oberfläche verhindert werden. Dabei stellt eine, bevorzugt korbförmige, Ausgestaltung des Bewehrungselementes sicher, dass auftretende Kräfte gleichmäßig auf das Element verteilt werden.

Es hat sich bewährt, dass das Bewehrungselement mehrere Metallstäbe, bevorzugt Stahlstäbe, besonders bevorzugt Stäbe aus Baustahl, und zumindest einen gebogenen Metalldraht, bevorzugt Stahldraht, aufweist. Hierbei können die Metallstäbe auftretende Kräfte aufnehmen, während der gebogene Metalldraht die Stabilität des Elementes erhöht. Insbesondere ein Anordnen des Metalldrahtes an und um die Metallstäbe bewirkt eine effiziente Übertragung der Kräfte auf die Metallstäbe. Als Metallstäbe werden vorzugsweise Stahlstäbe verwendet, wobei diese an der Oberfläche häufig gerippt ausgebildet sind. Derartige Stahlstäbe, insbesondere solche aus Baustahl, kommen oftmals bei der Herstellung von Bewehrungsgittern oder -körben zum Einsatz, welche zum Fertigen von Stahlbetonteilen genutzt werden. Vorzugsweise sind die Metallstäbe in einem korbförmigen Bewehrungselement entlang der Kanten angeordnet und über Metalldrähte miteinander verbunden, wobei das Bewehrungselement im Inneren hauptsächlich aus Metalldrähten gebildet ist. Dabei kann auch eine Öffnung im Bewehrungselement vorgesehen sein, welche für die Ausnehmung des Elementes Platz bietet. Folglich kann die Ausnehmung in der Oberseite des Elementes erstellt werden, ohne das Bewehrungselement freizulegen und/oder zu beschädigen, wodurch eine Korrosion des Bewehrungselementes weitgehend vermieden wird.

Vorzugsweise steht das Bewehrungselement bereichsweise aus dem Element, insbesondere aus dessen Oberseite, hervor. Hierdurch kann das Element mithilfe von Hebezeug oder Baumaschinen, insbesondere mit einem Gabelstapler, einem Bagger oder einem Traktor, auf einfache Weise aufgehoben und/oder positioniert werden. Ebenso kann ein bereichsweises Freilegen des Bewehrungselementes als Hervorstehen aus dem Element gesehen werden, wobei vorzugsweise eine weitere Vertiefung in die Oberseite des Elementes eingebracht wird. Auf diese Weise können Teile des Bewehrungselementes, insbesondere Metallstäbe, freigelegt und zugänglich gemacht werden, um das Element aufheben und/oder positionieren zu können. Je nach Ausgestaltung dieser weiteren Vertiefung, kann genug Platz für einen Zinken eines Gabelstaplers oder eines Holzgreifers geschaffen werden. Hierdurch kann das Element über einen hervorstehenden Teil des Bewehrungselementes mit dem Bagger, insbesondere mit dem Zinken des Holzgreifers, aufgenommen und frei im Gelände positioniert werden.

Besonders bevorzugt ist vorgesehen, dass der aus dem Element hervorstehende Teil des Bewehrungselementes eine Schlaufe bildet, an welcher das Element mittels eines Baggers oder dergleichen angehoben werden kann.

Mit Vorteil ist an der Oberseite zumindest eine Gewindehülse angeordnet, wobei optional Schlaufen und/oder Ösen vorgesehen sind, welche über ein Außengewinde lösbar mit der Gewindehülse verbindbar sind. Dadurch können temporär Befestigungsmöglichkeiten für Hebezeug oder Baumaschinen geschaffen werden. Für gewöhnlich ist die Gewindehülse aus Metall, insbesondere Stahl, ausgebildet und mit einem Innengewinde versehen. Bevorzugt schließt die Gewindehülse bündig mit der Oberseite des Elementes ab und erstreckt sich, insbesondere entlang der vierten Richtung, ins Innere des Elementes. In der Regel sind die Schlaufen und/oder die Ösen mit einem Außengewinde versehen und können in das Innengewinde der Gewindehülse eingeschraubt werden, sodass eine lösbare Verbindung entsteht. Zudem können die Schlaufen mit den Zinken von Holzgreifern, Baggern oder Gabelstaplern wechselwirken, wobei die Zinken vorzugsweise durch die Schlaufen geführt werden. Bevorzugt sind die Schlaufen aus Metall, insbesondere aus Drahtseilen, gebildet und endseitig mit einem Außengewinde versehen sind. In der Regel werden derartige aus Drahtseilen gebildete Schlaufen als Seilschlaufen bezeichnet. Bei einer Verwendung von Ösen können sich Verbindungsmittel wie Haken, Seile, Bänder und/oder Gurte als vorteilhaft erweisen, um die Ösen reversibel mit dem Hebezeug oder der Baumaschine zu verbinden. Üblicherweise sind die Ösen aus Metall, insbesondere aus Stahl, gebildet und weisen endseitig ein Außengewinde auf. Durch die lösbare Verbindung mit der Gewindehülse, können die Schlaufen und/oder die Ösen nach einem Positionieren des Elementes auf einfache Weise entfernt und andernorts aufbewahrt werden. Alternativ können die Schlaufen und/oder die Ösen auch am Element belassen und mit den Gewindehülsen verbunden bleiben. In der Regel wird die Gewindehülse vom ausgehärteten Material passgenau umschlossen, sodass diese irreversibel an der Oberseite des Elementes angeordnet ist. Um die Gewindehülse im Element zu verankern, kann diese auch am Bewehrungselement befestigt sein. Hierzu ist bevorzugt eine stoffschlüssige Verbindung, insbesondere eine Schweißverbindung, zwischen der Gewindehülse und dem Bewehrungselement vorgesehen.

Mit Vorteil ist vorgesehen, dass eine Unterseite und die Oberseite des Elementes derart ausgebildet sind, dass die Elemente aufeinander stapelbar sind. Dadurch können mehrere Elemente bei Nichtgebrauch platzsparend verstaut werden. Am einfachsten kann dies erreicht werden, wenn sowohl die Unterseite als auch die Oberseite des Elementes in korrespondierenden Bereichen flach ausgebildet sind. Alternativ können an der Unterseite auch hervorstehende Füße vorgesehen sein, über welche das Element auf der Oberseite eines zweiten Elementes abgestellt wird.

Das erfindungsgemäße Element wird bevorzugt im Zusammenhang mit weiteren entsprechenden Elementen für ein Holzlagersystem eingesetzt. Bei einem derartigen Holzlagersystem ist es günstig, wenn zumindest vier erfindungsgemäße Elemente vorgesehen sind, wobei jeweils zwei Elemente über endseitig aufgelegte erste Baumstämme miteinander verbunden und in der Ausnehmung jedes Elementes jeweils ein zweiter Baumstamm positioniert ist. Dadurch können auf einfache Weise und unabhängig von örtlichen Gegebenheiten weitere Baumstämme gelagert werden. Hierzu bilden die endseitig aufgelegten ersten Baumstämme die Basis des Holzlagersystems, auf welche weitere Baumstämme aufgelegt werden können. Um mehrere Baumstämme übereinander stapeln zu können und deren Herabrollen von der Basis zu verhindern, wird in der Ausnehmung jedes Elementes ein zweiter Baumstamm positioniert. Dementsprechend ist eine Begrenzung geschaffen, welche maßgeblich von der Länge des positionierten Baumstammes abhängt und ein, für weitere Baumstämme zur Verfügung stehendes, Stapelvolumen definiert.

Sind mehrere, insbesondere sechs, Elemente zum Bilden eines Holzlagersystems vorgesehen, können durch die in den Ausnehmungen positionierten zweiten Baumstämme in den mittig positionierten Elementen auch zwei Stapelvolumina definiert werden. Dadurch ergibt sich die Möglichkeit, die gelagerten Baumstämme auf einfache Weise sortieren zu können. Entsprechend kann ein erstes Stapelvolumen mit frisch geschlagenen Baumstämmen befüllt werden, wohingegen in einem zweiten Stapelvolumen bereits ältere Baumstämme gelagert sein können. Alternativ kann auf dieselbe Weise auch eine Sortierung von Holzqualitäten erfolgen. Zudem kann das Holzlagersystem über weitere Elemente verfügen, vorzugsweise acht oder mehr, sodass die Größe der Stapelvolumina variiert und/oder weitere Stapelvolumina definiert werden können.

Vorzugsweise ist vorgesehen, dass auf die ersten Baumstämme weitere Baumstämme aufgelegt sind. Hierdurch können diese vom Boden beabstandet gelagert werden, sodass die Aufnahme von Feuchtigkeit aus dem Untergrund auf einfache und effiziente Weise verhindert wird. Um die Beabstandung der aufgelegten ersten Baumstämme vom Boden zu erreichen, wird die Höhe der Elemente ausgenutzt.

Die verfahrensmäßige Aufgabe wird dadurch gelöst, dass ein zylindrisches Bauteil, welches vorzugsweise einen kreissegmentförmigen Querschnitt aufweist, am Bodenteil befestigt und die Schalung mit aushärtbarem Material befüllt wird. Dadurch können auf einfache und schnelle Weise eine Vielzahl von, vorzugsweise identen, Elementen gefertigt werden. Bei einem Befüllen der Schalung schafft das zylindrische Bauteil die beiden seitlichen Begrenzungsmittel auf der Oberseite des Elementes. Zudem wird durch die Ausgestaltung der Schalung eine geometrische Form des Elementes festgelegt. Obwohl die Schalung für gewöhnlich zum Herstellen eines quaderförmigen Elementes gebildet ist, kann diese alternativ auch derart ausgebildet sein, dass Elemente mit anderen geometrischen Grundformen realisiert werden können.

Mit Vorteil wird das Bewehrungselement in der Schalung angeordnet, ehe diese mit aushärtbarem Material befüllt wird. Dadurch wird das aushärtbare Material verstärkt und eine Lebensdauer des hergestellten Elementes verlängert. Als aushärtbares Material kommt vorzugsweise Beton zur Anwendung, wobei auch Kunststoffe in Betracht gezogen werden können. Die Anordnung des Bewehrungselementes erfolgt vorzugsweise durch einfaches Hineinlegen des Bewehrungselementes in die Schalung. Darüber hinaus kann angedacht sein, dass Abstandhalter am Bodenteil der Schalung angebracht werden, auf welchen das Bewehrungselement angeordnet wird, um dessen Position innerhalb des Elementes präzise festlegen zu können. Als Abstandhalter kommen überwiegend Materialien zum Einsatz, welche ähnliche Ausdehnungskoeffizienten wie das Material des Elementes und/oder des Bewehrungselementes aufweisen. Im bevorzugten Fall eines Stahlbetonelementes kommt hier insbesondere ein Abstandhalter aus Beton in Betracht, wobei alternativ auch Abstandhalter aus Kunststoff verwendet werden können.

Entsprechend den vorstehend erläuterten Vorteilen besteht eine erfindungsgemäße Verwendung darin, ein erfindungsgemäßes Element zur Bildung eines Holzlagersystems einzusetzen.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine perspektivische Darstellung einer ersten Ausführungsform eines Holzlagersystems;
Fig. 2 eine perspektivische Darstellung einer weiteren Ausführungsform des Holzlagersystems;
Fig. 3 eine perspektivische Darstellung einer ersten Ausführungsform eines Elementes in einer Arbeitsposition;
Fig. 4 eine Draufsicht auf das Element gemäß Fig. 3;
Fig. 5 eine perspektivische Darstellung einer weiteren Ausführungsform des Elementes in der Arbeitsposition;
Fig. 6 eine perspektivische Darstellung eines Bewehrungselementes.

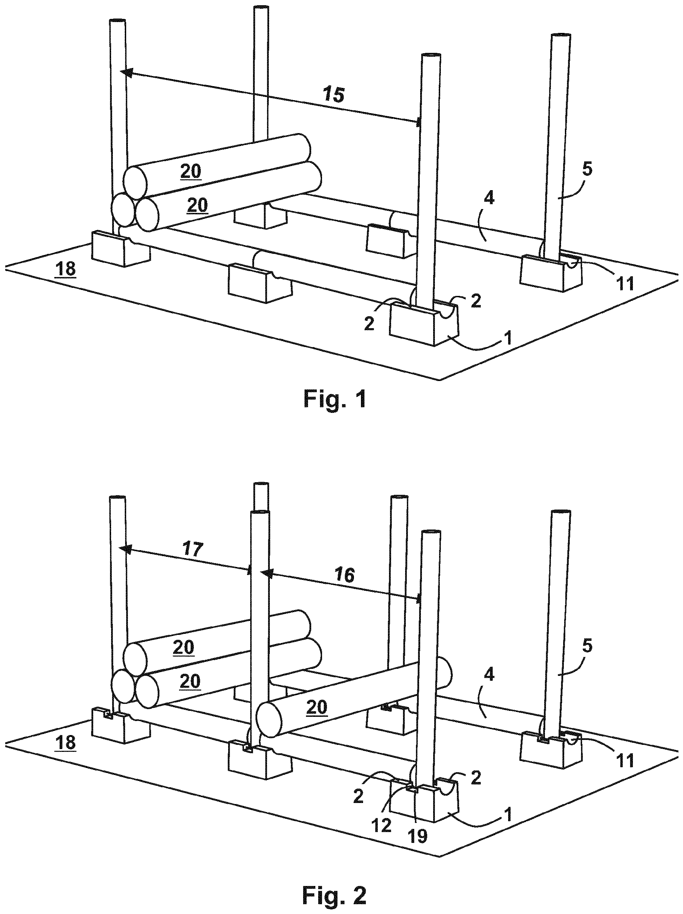

Fig. 1 zeigt eine perspektivische Darstellung einer ersten Ausführungsform eines Holzlagersystems. Dabei ist ersichtlich, dass sechs Elemente 1 in zwei Reihen auf einem Untergrund 18 angeordnet sind und jeweils drei Elemente 1 über endseitiges Auflegen von ersten Baumstämmen 4 miteinander in Verbindung stehen, sodass eine Basis zur Auflage von weiteren Baumstämmen 20 geschaffen wird. Dementsprechend sind die ersten Baumstämme 4 liegend, also etwa horizontal, auf jeweils zwei Elementen 1 positioniert. Darüber hinaus sind vier zweite Baumstämme 5 stehend, also etwa vertikal, in Ausnehmungen 6 von vier Elementen 1 positioniert, sodass durch diese ein Stapelvolumen 15 des Holzlagersystems definiert wird. Entsprechend können drei weitere Baumstämme 20 erkannt werden, welche bereits auf den ersten Baumstämmen 4 gelagert sind. Die dargestellten Elemente 1 sind in einer Quaderform ausgebildet und weisen jeweils zwei seitliche Begrenzungsmittel 2 mit einer dazwischenliegenden Vertiefung 11 auf. Durch eine runde Formgebung der Vertiefung 11 werden die ersten Baumstämme 4 in einer Ruheposition gehalten und deren Auflagefläche am Element 1 vergrößert. Die Ausnehmung 6 ist anhand dieser Darstellung nicht ersichtlich, weshalb deren Positionierung lediglich durch eine Anordnung der stehenden zweiten Baumstämme 5 erahnt werden kann.

In Fig. 2 ist eine weitere Ausführungsführungsform des Holzlagersystems perspektivisch dargestellt, welche ähnlich dem in Fig. 1 dargestellten ausgebildet ist. Hierbei sind die Elemente 1 jedoch zusätzlich mit einer weiteren Vertiefung 19 ausgebildet. Durch diese weitere Vertiefung 19 werden Teile eines im Inneren der Elemente 1 angeordneten Bewehrungselementes 12 freigelegt, über welches die Elemente 1 auf einfache Weise mittels eines Baggers oder eines Traktors, insbesondere über einen Holzgreifer, aufgehoben, gestapelt und/oder positioniert werden können. Zudem sind in dieser Darstellung die mittig positionierten Elemente 1 mit vertikal positionierten zweiten Baumstämmen 5 versehen, sodass zwei getrennte Stapelvolumina entstehen. Dabei ist ein erstes Stapelvolumen 16 mit einem weiteren Baumstamm 20 und ein zweites Stapelvolumen 17 mit drei weiteren Baumstämmen 20 befüllt.

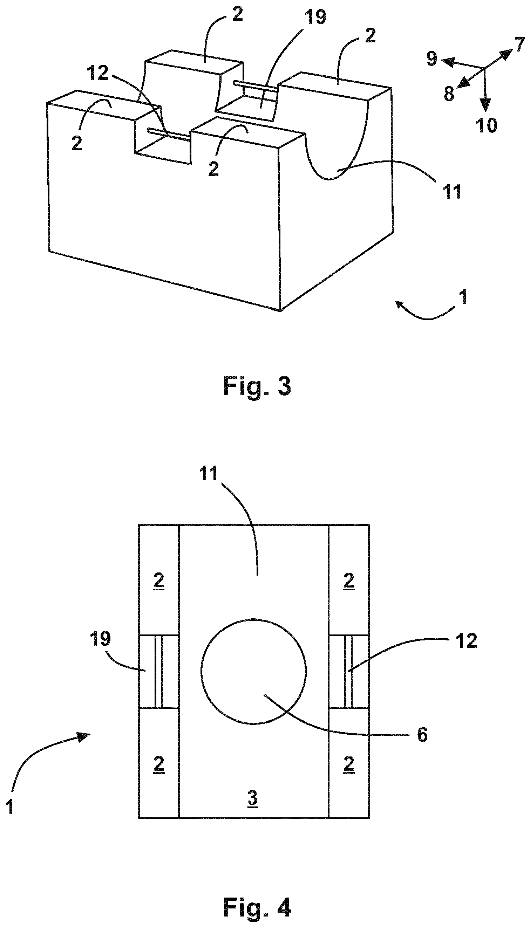

Fig. 3 zeigt eine perspektivische Darstellung einer ersten Ausführungsform eines Elementes 1 in einer Arbeitsposition, wobei auf einer Oberseite 3 des Elementes 1 die seitlichen Begrenzungsmittel 2 über Kanten in die Vertiefung 11 übergehen. Zudem ist im gezeigten Element 1 ein Bewehrungselement 12 angeordnet, welches an der Oberseite 3 zumindest teilweise aus dem Element 1 herausragt. Hierzu ist die Oberseite 3 mit einer weiteren Vertiefung 19 versehen, welche sich hier entlang einer ersten Richtung 7 oder einer zweiten Richtung 8 über das gesamte Element 1 erstreckt. Alternativ kann diese weitere Vertiefung 19 auch als zwei weitere Vertiefungen 19 angesehen werden, welche sich entlang der ersten Richtung 7 bzw. zweiten Richtung 8 erstrecken. Um die Richtungen 7, 8, 9, 10 leicht nachvollziehen zu können, ist rechter Hand eine Legende dargestellt. Anhand dieser ist ersichtlich, dass sich die Vertiefung 11 entlang einer dritten Richtung 9 und über das gesamte Element 1 erstreckt, wobei die vier seitlichen Begrenzungsmittel 2 eine Auslenkung eines nicht gezeigten ersten Baumstammes 4, welcher liegend in der Vertiefung 11 positioniert ist, entlang der ersten Richtung 7 und der zweiten Richtung 8 begrenzen. Aufgrund der Perspektive ist die Ausnehmung 6 auch anhand dieser Darstellung nicht ersichtlich, obwohl diese mittig auf der Oberseite 3 des Elementes 1 positioniert ist und sich entlang einer vierten Richtung 10 ins Innere des Elementes 1 erstreckt.

Fig. 4 zeigt eine Draufsicht auf das Element 1 gemäß Fig. 3, anhand welcher bevorzugte Abmessungen der an der Oberseite 3 befindlichen strukturellen Merkmale ersichtlich sind. Insbesondere geht hieraus Größenverhältnisse von seitlichen Begrenzungsmitteln 2, der Vertiefung 11 sowie des Bewehrungselementes 12 hervor. Zudem wird anhand dieser Darstellung eine relative Dimensionierung der Ausnehmung 6 ersichtlich, welche sich entlang der vierten Richtung 10 ins Innere des Elementes 1 erstreckt. In der vorliegenden Ausführungsvariante weist diese Ausnehmung 6 einen runden Querschnitt auf, wodurch der zweite Baumstamm 5 stehend in dieser positioniert werden kann. Dabei kann die Ausnehmung 6 auch als Öffnung ausgebildet sein und das Element 1 durchsetzen, sodass ein darin positionierter zweiter Baumstamm 5 mit dem Untergrund 18 in Berührung kommen kann. Der stehende zweite Baumstamm 5 kann in der Ausnehmung 6 beispielsweise mit Keilen fixiert werden.

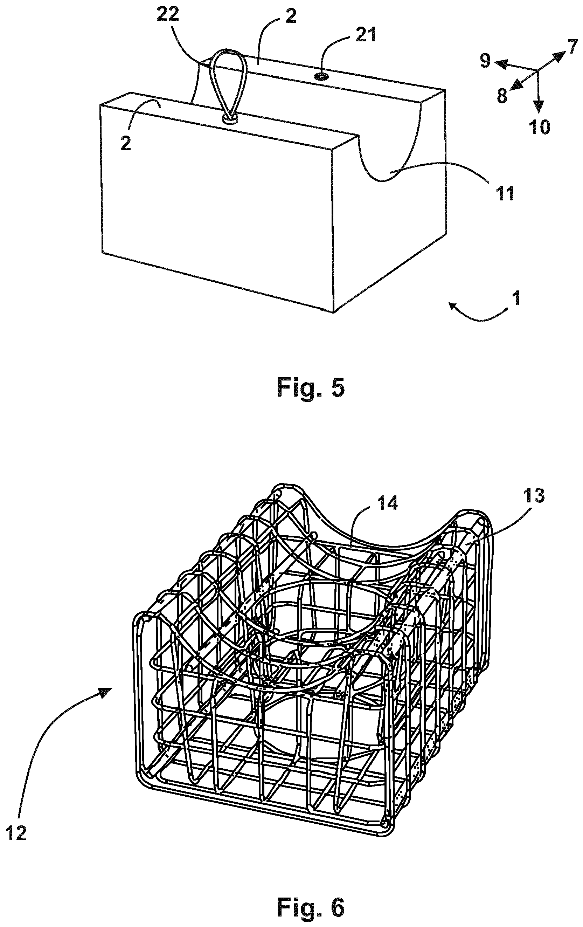

Fig. 5 zeigt eine weitere Ausführungsform des Elementes 1 in der Arbeitsposition, welches ähnlich der in der Fig. 3 gezeigten Ausführungsform des Elementes 1 ebenfalls eine Vertiefung 11, seitliche Begrenzungsmittel 2 und eine Ausnehmung 6 aufweist. Die Ausnehmung 6 ist auch in dieser Ausführungsform mittig auf der Oberseite 3 des Elementes positioniert, jedoch aufgrund der Perspektive nicht erkennbar. Im Unterschied zur Ausführungsform der Fig. 3 weist die hier gezeigte Ausführungsform des Elementes 1 hingegen nur zwei seitliche Begrenzungsmittel 2 und keine weitere Vertiefung 19 auf. Allerdings sind an der Oberseite 3 zwei Gewindehülsen 21 angeordnet, welche bündig mit der Oberseite 3 abschließen und sich entlang der vierten Richtung 10 ins Innere des Elementes 1 erstrecken. Zudem ist eine Schlaufe 22 ersichtlich, insbesondere eine Seilschlaufe, welche endseitig mit einem Außengewinde versehen und in die Gewindehülse 21 eingeschraubt ist. Darüber hinaus sind die Gewindehülsen 21 mit dem im Inneren des Elementes 1 angeordneten Bewehrungselement 12 verbunden, welches in dieser Darstellung jedoch nicht erkennbar ist.

Fig. 6 zeigt eine perspektivische Darstellung eines Bewehrungselementes 12, welches in den in Fig. 3 bis5 dargestellten Elementen 1 enthalten ist. Dieses Bewehrungselement 12 ist korbförmig ausgebildet und besteht aus Metallstäben 13 sowie Metalldrähten 14. Dabei verlaufen die Metallstäbe 13 entlang der dritten Richtung 9 und verstärken Kanten des Elementes 1. Die Metalldrähte 14 hingegen bilden ein korbartiges Geflecht, welches die Metallstäbe 13 miteinander verbindet. Zudem sind Metalldrähte 14 derart gebogen, dass eine Form der seitlichen Begrenzungsmittel 2 sowie der Vertiefung 11 ersichtlich wird. Folglich werden auch diese Strukturen vom Bewehrungselement 12 verstärkt. Darüber hinaus ist in einer Mitte des Bewehrungselementes 12 eine zylindrische Form zu einem Einbringen der Ausnehmung 6 freigelassen, wodurch die Ausnehmung 6 ohne Beschädigung des Bewehrungselementes 12 in das Element 1 eingebracht werden kann.

Mit einem erfindungsgemäßen Element 1 ist es auf einfache Weise möglich, unabhängig von örtlichen Gegebenheiten und mittels in der Regel vorhandenen Baumstämmen ein Holzlagersystem zu errichten.

## Patentansprüche

1. Element (1) zur Bildung eines Holzlagersystems, welches zumindest teilweise aus einem ausgehärteten Material, insbesondere Beton, gebildet ist, **dadurch gekennzeichnet, dass** an einer Oberseite (3) zwei seitliche Begrenzungsmittel (2) vorgesehen sind, zwischen welchen ein liegender, erster Baumstamm (4) endseitig positionierbar ist, wobei die Oberseite (3) ferner eine Ausnehmung (6) aufweist, in welcher ein zweiter Baumstamm (5) stehend positionierbar ist.

2. Element (1) nach Anspruch 1, **dadurch gekennzeichnet, dass** die seitlichen Begrenzungsmittel (2) derart auf der Oberseite (3) angeordnet sind, dass eine Auslenkung des ersten Baumstammes (4) aus einer Ruheposition sowohl in eine erste Richtung (7) als auch in eine zweite Richtung (8) begrenzbar ist.

3. Element (1) nach Anspruch 1 oder 2, **dadurch gekennzeichnet, dass** zwischen den seitlichen Begrenzungsmitteln (2) zumindest eine Vertiefung (11) mit rundem, bevorzugt mit kreissegmentförmigem, Querschnitt vorgesehen ist, welche sich im Wesentlichen konstant entlang einer dritten Richtung (9) erstreckt.

4. Element (1) nach Anspruch 3, **dadurch gekennzeichnet, dass** die Vertiefung (11) und die Ausnehmung (6) einander zumindest teilweise schneiden.

5. Element (1) nach einem der Ansprüche 1 bis 4, **dadurch gekennzeichnet, dass** die Ausnehmung (6) als Öffnung ausgebildet ist, welche sich entlang einer vierten Richtung (10) erstreckt und das Element (1) vorzugsweise durchsetzt.

6. Element (1) nach einem der Ansprüche 1 bis 5, **dadurch gekennzeichnet, dass** innerhalb des Elementes (1) zumindest ein, vorzugsweise korbförmiges, Bewehrungselement (12) angeordnet ist.

7. Element (1) nach Anspruch 6, **dadurch gekennzeichnet, dass** das Bewehrungselement (12) mehrere Metallstäbe (13), bevorzugt Stahlstäbe, besonders bevorzugt Stäbe aus Baustahl, und zumindest einen gebogenen Metalldraht, bevorzugt Stahldraht, aufweist.

8. Element (1) nach Anspruch 6 oder 7, **dadurch gekennzeichnet, dass** das Bewehrungselement (12) bereichsweise aus dem Element (1), insbesondere aus dessen Oberseite (3), hervorsteht.

9. Element (1) nach einem der Ansprüche 1 bis 8, **dadurch gekennzeichnet, dass** an der Oberseite (3) zumindest eine Gewindehülse (21) angeordnet ist, wobei optional Schlaufen (22) und/oder Ösen vorgesehen sind, welche über ein Außengewinde lösbar mit der Gewindehülse (21) verbindbar sind.

10. Element (1) nach einem der Ansprüche 1 bis 9, **dadurch gekennzeichnet, dass** eine Unterseite und die Oberseite (3) des Elementes (1) derart ausgebildet sind, dass die Elemente (1) aufeinander stapelbar sind.

11. Holzlagersystem, umfassend zumindest vier Elemente (1) nach einem der Ansprüche 1 bis 10 und sechs Baumstämme, wobei jeweils zwei Elemente (1) über endseitig aufgelegte erste Baumstämme (4) miteinander verbunden und in der Ausnehmung (6) jedes Elementes (1) jeweils ein zweiter Baumstamm (5) positioniert ist.

12. Holzlagersystem nach Anspruch 11, **dadurch gekennzeichnet, dass** auf die ersten Baumstämme (4) weitere Baumstämme (20) aufgelegt sind.

13. Verfahren zum Herstellen eines Elementes (1), insbesondere eines Elementes (1) nach einem der Ansprüche 1 bis 10, wobei eine Schalung mit einem Bodenteil verwendet wird, um eine Formgebung des Elementes (1) festzulegen, **dadurch gekennzeichnet, dass** ein zylindrisches Bauteil, welches vorzugsweise einen kreissegmentförmigen Querschnitt aufweist, am Bodenteil befestigt und die Schalung mit aushärtbarem Material befüllt wird.

14. Verfahren nach Anspruch 13, **dadurch gekennzeichnet, dass** in der Schalung ein Bewehrungselement (12) angeordnet wird, ehe diese mit aushärtbarem Material befüllt wird.

15. Verwendung eines Elementes (1) nach einem der Ansprüche 1 bis 10 zur Bildung eines Holzlagersystems.
